# EUROPEAN PATENT APPLICATION

(11) **EP 3 107 190 A1**
(43) Date of publication of application: **21.12.2016**
(21) Application number: 15748473.4
(22) Date of filing: 10.02.2015
(51) Int. Cl.: H02K 1/18

(54) **ROTATING ELECTRICAL MACHINE**

(30) Priority: 13.02.2014 JP 2014025239
(71) Applicant: Kabushiki Kaisha Toyota Jidoshokki, Kariya-shi, Aichi 448-8671 (JP)
(72) Inventor: UETSUJI, Kiyoshi, Kariya-shi Aichi 448-8671 (JP); UMEMURA, Satoshi, Kariya-shi Aichi 448-8671 (JP); OSHITA, Makio, Kariya-shi Aichi 448-8671 (JP)
(74) Representative: Winter, Brandl, Fürniss, Hübner, Röss, Kaiser, Polte - Partnerschaft mbB
(86) International application number: PCT/JP2015/053630
(87) International publication number: WO 2015/122405

(57) **Abstract**

An electric motor includes a housing, a rotary shaft supported rotatably by the housing, a rotor fixed to the rotary shaft, and a stator fixed to the housing and provided opposite the rotor on a radial direction outer side of the rotor, wherein the stator includes a stator core formed by laminating a plurality of steel plates, the stator core is fixed to a stator attachment surface provided on an inner peripheral surface of the housing, and an inner diameter expansion region is provided adjacent to the stator attachment surface on the inner peripheral surface of the housing in a position corresponding to an end part of the stator core, the inner diameter expansion region having a larger diameter than the stator attachment surface so as not to contact the stator core. As a result, deformation of the laminated steel plates forming the stator core can be prevented by means of a simple structure.

## Description

### TECHNICAL FIELD

This invention relates to a rotating electric machine.

### BACKGROUND ART

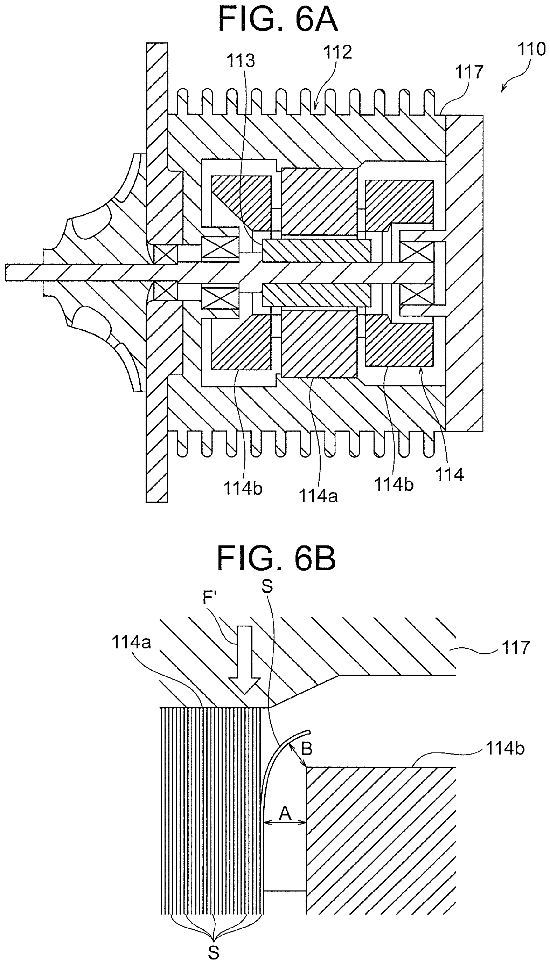

An electric turbocharger installed in a vehicle includes a rotating electric machine, or in other words an electric motor, used to drive a compressor. As shown in Fig. 6A, an electric motor 112 of a conventional turbocharger 110 includes a rotor 113 and a stator 114 that are disposed opposite each other in the interior of a housing 117. The stator 114 includes a stator core 114a and stator coils 114b provided on respective ends of the stator core 114a. As shown in Fig. 6B, the stator core 114a of the stator 114 is formed from laminated steel plates obtained by overlapping a plurality of thin steel plates S. Further, an insulation distance A is set between the stator core 114a and the stator coil 114b. Moreover, the stator core 114a of the stator 114 is fixed to the housing 117 by shrink fitting. Note that "shrink fitting" is a method of fixing the stator 114 in position by thermally expanding the housing 117 so that an inner diameter thereof expands, fitting the stator core 114a of the stator 114, which is at normal temperature, in a predetermined position, and then returning the temperature of the housing 117 to a normal temperature so that the inner diameter thereof contracts.

Here, when the inner diameter of the housing 117 contracts, the stator core 114a of the shrink-fitted stator 114 receives a fastening force F' from the housing 117. As a result, the steel plate S on the end of the laminated steel plates forming the stator core 114a of the stator 114 may separate from the adjacent steel plate S and deform so as to curl over, as shown in Fig. 6B. The electric turbocharger 110 is installed specifically in a vehicle, and therefore, to achieve a reduction in weight, the housing 117 is formed from aluminum. Moreover, due to a wide operating temperature range, the fastening force F' from the housing 117 increases at low temperatures, making it more likely for the steel plate S to deform. Furthermore, the electric motor 112 used in the electric turbocharger 110 rotates at an extremely high speed, and therefore, to reduce eddy current loss, the steel plates used as the laminated steel plates are thinner than usual. As a result, the degree to which the steel plate curls over or otherwise deforms is particularly striking.

When the steel plate S deforms in this manner, a distance B between the curled-over steel plate S and the stator coil 114b becomes smaller than the originally set insulation distance A between the stator core 114a and the stator coil 114b of the stator 114. When the distance B between the steel plate S and the stator coil 114b is smaller than the set insulation distance A, electrical insulation may break down upon application of a voltage, and as a result, short circuiting may occur.

To solve this problem, in an electric motor described in Patent Document 1, end portion steel plates are prevented from deforming so as to curl over by reducing the diameter of the laminated steel plates forming the stator core at the respective end parts only, as shown in Figs. 3 to 5 of Patent Document 1. CITATION LIST

### PATENT DOCUMENT

Patent Document 1: Japanese Patent Application Publication No. 2011-172335

### SUMMARY OF INVENTION

### TECHNICAL PROBLEM

In the electric motor described in Patent Document 1, however, the laminated steel plates contact the housing in locations other than the respective end portions of the core, and the steel plates in these locations may still be deformed by the fastening force from the housing. When a steel plate located close to the stator coil curls over in a location other than the end portions of the core, it is similarly difficult to secure an accurate insulation distance between the steel plates and the stator coil. Moreover, in the electric motor of Patent Document 1, a new stator core mold must be prepared to reduce the diameter of only the respective end portions of the stator core, leading to an increase in manufacturing costs.

This invention has been designed to solve the problems described above, and an object thereof is to provide a rotating electric machine in which laminated steel plates forming a stator core can be prevented from deforming by means of a simple structure.

### SOLUTION TO PROBLEM

To solve the problems described above, a rotating electric machine according to this invention includes: a casing, a rotary shaft supported rotatably by the casing, a rotor attached fixedly to the rotary shaft and housed in the interior of the casing, and a stator fixed to the casing and provided opposite the rotor on a radially outer side of the rotor, wherein the stator includes a stator core formed from a plurality of steel plates laminated in an axial direction of the rotary shaft, the stator core is fixedly attached to a stator attachment surface provided on an inner peripheral surface of the casing, an inner diameter expansion region formed so as not to contact the stator core is provided adjacent to the stator attachment surface on the inner peripheral surface of the casing in a position opposing an end part of the stator core, the inner diameter expansion region is adjacent to the stator attachment surface, and a diameter of the inner diameter expansion region is larger than a diameter of the stator attachment surface.

Thus, the end part of the stator core does not contact the casing, and as a result, no force acts on the end part of the stator core even when the casing contracts.

Further, the inner diameter expansion region of the rotating electric machine according to this invention may include an inclined surface that inclines in the axial direction of the rotary shaft.

Furthermore, a length of the inner diameter expansion region in the axial direction of the rotary shaft may equal or exceed a length of ten of the laminated steel plates.

Moreover, the inner diameter expansion region may be provided respectively in positions opposing end parts forming respective ends of the stator core.

Furthermore, the length of the inner diameter expansion region in the axial direction of the rotary shaft may be increased as an outer diameter of the stator core increases.

### ADVANTAGEOUS EFFECTS OF INVENTION

With the rotating electric machine according to this invention, the laminated steel plates forming the stator core can be prevented from deforming by means of a simple structure.

### BRIEF DESCRIPTION OF DRAWINGS

[Fig. 1] Fig. 1 is a schematic view showing a supercharging system employing an electric turbocharger that includes a rotating electric machine according to a first embodiment of this invention.
[Fig. 2] Fig. 2 is a schematic sectional view of the rotating electric machine according to the first embodiment of this invention.
[Fig. 3] Fig. 3 is an enlarged view showing the vicinity of a fixing location between a housing and a stator core in the rotating electric machine shown in Fig. 2.
[Fig. 4] Fig. 4 is an enlarged view showing the vicinity of an end portion of the stator core in the rotating electric machine shown in Fig. 2.
[Fig. 5] Fig. 5 is an enlarged schematic view showing the vicinity of a fixing location between a housing and a stator core in a rotating electric machine according to a second embodiment of this invention.
[Fig. 6A] Fig. 6A is a schematic sectional view showing a rotating electric machine according to a conventional example.
[Fig. 6B] Fig. 6B is an enlarged view showing the condition of a stator core when a fastening force from a housing acts thereon in the rotating electric machine shown in Fig. 6A.

### DESCRIPTION OF EMBODIMENTS

Embodiments of this invention will be described below on the basis of the attached drawings.

### First Embodiment

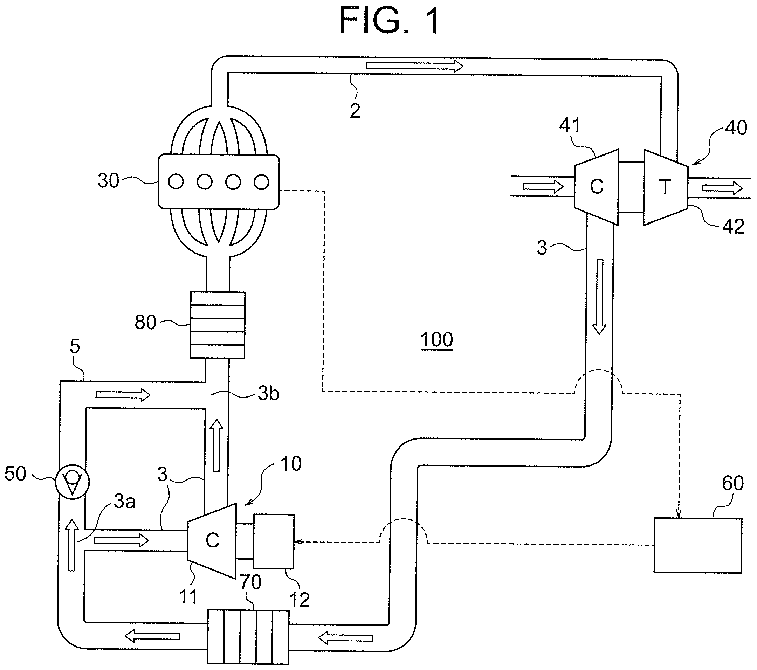

Fig. 1 shows a supercharging system 100 including an electric turbocharger 10 that includes a rotating electric machine, or in other words an electric motor 12, according to this embodiment. As shown in Fig. 1, an exhaust passage 2 through which exhaust gas flows and an intake passage 3 through which intake air flows are connected to an engine 30 of a vehicle. A turbine portion 42 of an exhaust gas turbocharger 40 is provided in the exhaust passage 2. Meanwhile, a compressor portion 41 of the exhaust gas turbocharger 40 is provided in the intake passage 3. In the exhaust gas turbocharger 40, the compressor portion 41 and the turbine portion 42 are connected integrally so that when the turbine portion 42 is driven to rotate by pressure from the exhaust gas, the compressor portion 41 also rotates. In other words, the exhaust gas turbocharger 40 is driven by energy from the exhaust gas of the engine 30 so as to compress the intake air. Further, a first intercooler 70, an electric turbocharger 10, and a second intercooler 80 are provided in the intake passage 3 downstream of the exhaust gas turbocharger 40 in that order.

Here, the intake passage 3 together with the exhaust gas turbocharger 40 and the electric turbocharger 10 provided in the intake passage 3 constitute the supercharging system 100 for compressing the intake air that flows into the engine 30.

The electric turbocharger 10 includes a compressor 11 provided in the intake passage 3, and the electric motor 12, which is connected to the compressor 11. In other words, the electric turbocharger 10 is driven by the electric motor 12 so as to compress the intake air. Here, an ECU 60 is electrically connected to both the engine 30 and the electric turbocharger 10. Further, a bypass passage 5 that bypasses the electric turbocharger 10 is connected to the intake passage 3. Here, one end of the bypass passage 5 is connected to a first bifurcation point 3a provided downstream of the first intercooler 70 and upstream of the electric turbocharger 10. Furthermore, another end of the bypass passage 5 is connected to a second bifurcation point 3b provided downstream of the electric turbocharger 10 and upstream of the second intercooler 80. A check valve 50 is provided in the bypass passage 5.

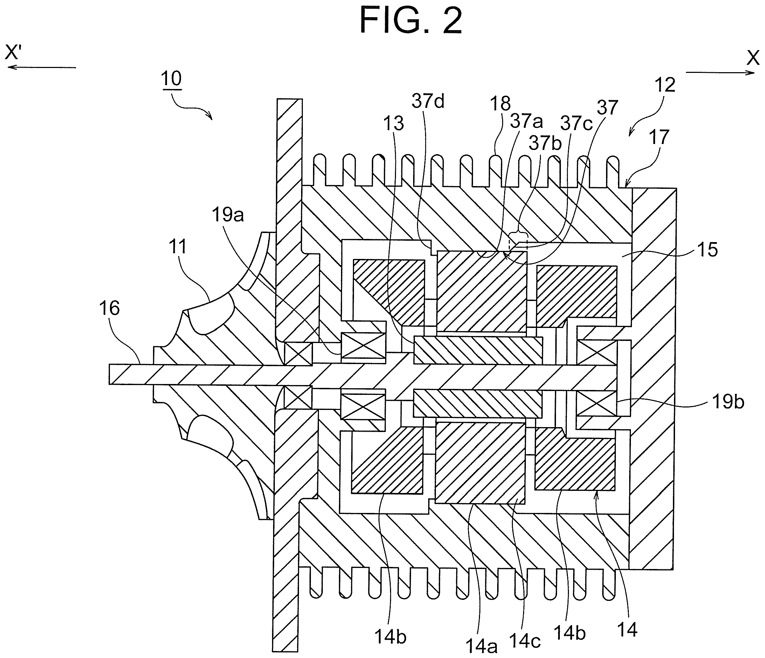

The structure of the electric turbocharger 10 will now be described in detail using Figs. 2 to 4.

As shown in Fig. 2, the electric motor 12 of the electric turbocharger 10 includes an aluminum housing 17. A plurality of heat dissipating fins 18 are formed on an outer peripheral surface of the housing 17. Further, a substantially columnar accommodation space 15 is formed in the interior of the housing 17. A rotary shaft 16 extends through the accommodation space 15 along a central axis of the housing 17. The rotary shaft 16 is supported rotatably by the housing 17 via bearings 19a, 19b. Here, axial directions of the rotary shaft 16 are defined such that a rightward direction on the paper surface of Fig. 2 is set as an X direction and a leftward direction on the paper surface of Fig. 2 is set as an X' direction. An X' direction end of the rotary shaft 16 extends so as to project to the exterior of the housing 17. The compressor 11 is attached fixedly to the part of the rotary shaft 16 that projects to the exterior of the housing 17 so as to be capable of rotating integrally therewith.

Here, the housing 17 constitutes a casing.

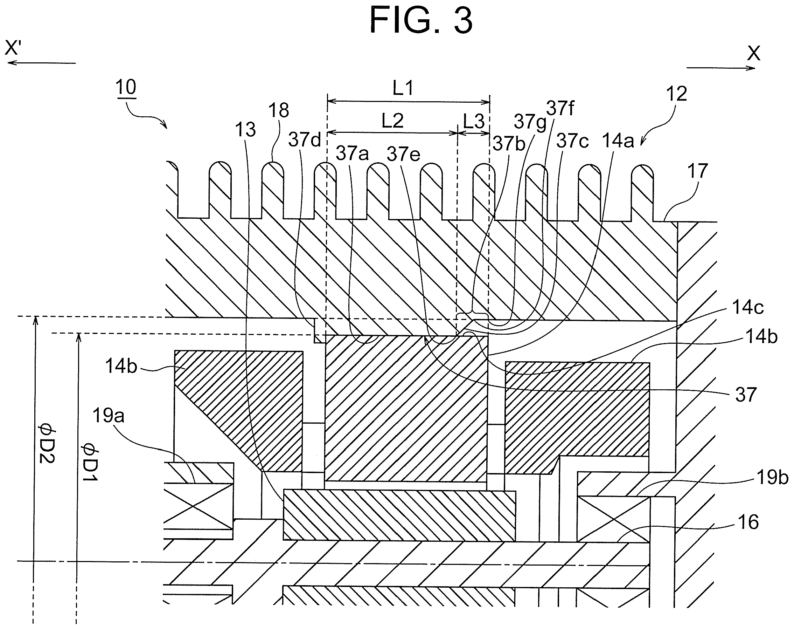

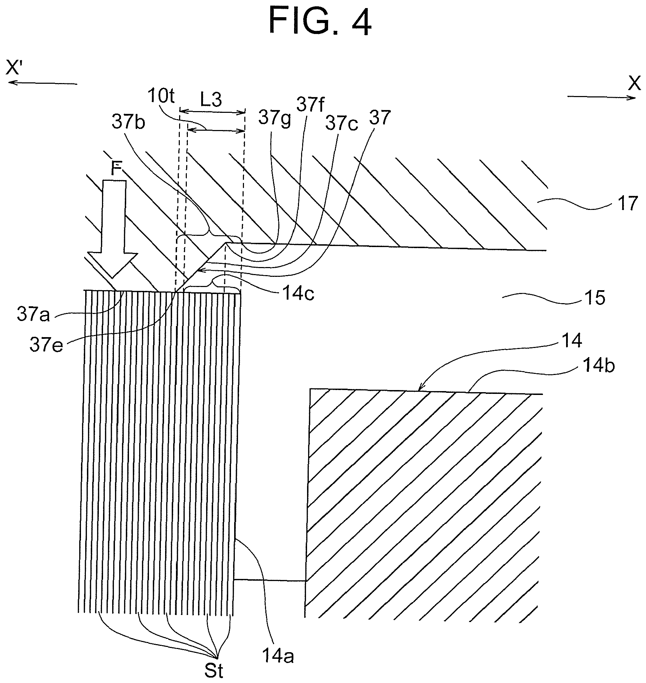

In the accommodation space 15 of the housing 17, a rotor 13 is attached fixedly to the rotary shaft 16. In other words, the rotor 13 is housed in the interior of the housing 17. Further, a stator bearing portion 37 is formed as a strip-form projecting part on an inner peripheral surface of the housing 17 facing the accommodation space 15. Here, the stator bearing portion 37 includes a stator attachment surface 37a formed as a cylindrical curved surface. Further, an inclined surface 37c is formed adjacent to the stator attachment surface 37a on an X direction end portion of the stator bearing portion 37 so as to widen outwardly in a radial direction toward the X direction side. In other words, the inclined surface 37c inclines relative to the axial direction of the rotary shaft 16. As shown in Fig. 3, a boundary between the stator attachment surface 37a and the inclined surface 37c constitutes an X' direction end portion 37e of the inclined surface 37c. Furthermore, 37f denotes an X direction end portion of the inclined surface 37c. Meanwhile, a flange 37d that projects inwardly in the radial direction is formed adjacent to the stator attachment surface 37a on an X' direction end portion of the stator bearing portion 37. Further, a substantially cylindrical stator core 14a is fixed by shrink fitting to the stator attachment surface 37a of the stator bearing portion 37. The stator core 14a is formed by laminating a plurality of steel plates St having uniform thicknesses t in the axial direction of the rotary shaft (see Fig. 4). Note that an outer peripheral surface of the stator core 14a forms a cylindrical curved surface. Furthermore, an X' direction end portion of the stator core 14a contacts the flange 37d such that the stator core 14a is disposed opposite the rotor 13 on an outer side of the rotor 13. Moreover, stator coils 14b are attached to respective ends of the stator core 14a. The stator core 14a and the stator coils 14b together constitute a stator 14.

Further, the flange 37d functions as a stopper that delimits the position of the stator 14 when the stator 14 is fitted into the interior of the housing 17 from the X direction side. Moreover, the flange 37d contacts the X' direction end portion steel plate St of the stator core 14a so that the steel plate St on the X' direction end portion of the stator core 14a is prevented from curling over by the flange 37d.

As shown in Fig. 3, on the inner peripheral surface of the housing 17, which faces the accommodation space 15, a line corresponding to a position in which an X direction end surface of the stator core 14a extends outwardly in the radial direction is set as an expansion portion boundary line 37g. A region on the inner peripheral surface of the housing 17 between the end portion 37e of the inclined surface 37c and the expansion portion boundary line 37g constitutes an inner diameter expansion region 37b.

The length of the stator core 14a in the axial direction of the rotary shaft 16 is set as L1, and the length of the stator attachment surface 37a is set as L2. Further, the length of the inner diameter expansion region 37b is set as L3 (= L1 - L2). Here, as shown in Fig. 4, the length L3 of the inner diameter expansion region 37b is greater than a length 10t of ten of the laminated steel plates St. Furthermore, here, a part of the stator core 14a constituted by the ten steel plates laminated from the X direction end portion of the stator core 14a is set as an end part 14c of the stator core 14a. In other words, the inner diameter expansion region 37b on the inner peripheral surface of the housing 17 is formed in a position opposing the end part 14c of the stator core 14a.

Note that the length L2 of the stator attachment surface 37a is set so that the stator 14 can remain fixed to the housing 17 over the entire operating temperature range of the electric turbocharger 10.

As shown in Fig. 3, the outer diameter of the stator core 14a is set at ΦD1. ΦD1 is set at approximately 60 mm. Note that since the stator core 14a is fixed to the stator bearing portion 37 by shrink fitting, the diameter of the stator attachment surface 37a of the stator bearing portion 37 is set to be substantially identical to the outer diameter of the stator core 14a. In other words, the diameter of the stator attachment surface 37a is also set at ΦD1. Further, parts of an inner wall of the housing 17 other than the stator bearing portion 37, or in other words a part that extends in the X direction from the end portion 37f of the inclined surface 37c and a part that extends in the X' direction from the flange 37d, are formed as cylindrical curved surfaces having an inner diameter of ΦD2. The diameter ΦD2 is larger than the diameter ΦD1. In other words, in the inner diameter expansion region 37b, the inner diameter of the housing 17 expands in the X direction from ΦD1 to ΦD2, and therefore the diameter of the inner diameter expansion region 37b is larger than the diameter of the stator attachment surface 37a. Moreover, the diameter of the inner diameter expansion region 37b is simultaneously larger than the diameter of the stator core 14a, and therefore the inner diameter expansion region 37b is formed so as not to contact the stator core 14a.

Referring to Fig. 1, the flow of intake air through the supercharging system 100 will now be described.

When the engine 30 rotates at or above a predetermined speed, the turbine portion 42 of the exhaust gas turbocharger 40 is driven to rotate by the pressure of the exhaust gas flowing into the exhaust passage 2. Accordingly, the compressor portion 41 of the exhaust gas turbocharger 40 is driven, and as a result, the intake air flowing through the intake passage 3 is compressed by the compressor portion 41. Next, the compressed intake air is cooled by the first intercooler 70. Note that at this time, the ECU 60 reads the rotation speed of the engine 30. The ECU 60 determines whether or not the engine 30 is rotating at a high speed, and when the engine 30 is rotating at a high speed that equals or exceeds the predetermined speed, the ECU 60 maintains the electric motor 12 of the electric turbocharger 10 in a stopped condition. The compressor 11 of the electric turbocharger 10, which has not been driven to rotate, serves as resistance to the flow of intake air through the intake passage 3. Accordingly, the intake air flows into the bypass passage 5 after passing through the first bifurcation point 3a. At this time, the check valve 50 is maintained in an open condition by the pressure of the intake air so that the intake air flows through the bypass passage 5, flows back into the intake passage 3 via the second bifurcation point 3b, passes through the second intercooler 80, and then flows into the engine 30.

When, on the other hand, the rotation of the engine 30 switches from high speed rotation at or above the predetermined speed to low speed rotation below the predetermined speed, the turbine portion 42 of the exhaust gas turbocharger 40 cannot obtain sufficient energy from the exhaust gas. Hence, the compressor portion 41 of the exhaust gas turbocharger 40 cannot increase the supercharging pressure of the intake air sufficiently. Here, the ECU 60 determines whether or not the engine 30 is rotating at or above the predetermined speed, and when the engine 30 is rotating below the predetermined speed, the ECU 60 drives the electric motor 12 of the electric turbocharger 10 to rotate. Likewise when the vehicle is started from a stopped condition, the turbine portion 42 of the exhaust gas turbocharger 40 cannot obtain sufficient energy from the exhaust gas immediately after startup, and therefore the electric turbocharger 40 may be driven.

More specifically, a three-phase alternating current is passed through the stator coils 14b from a storage battery (not shown) via an inverter (not shown) such that a rotating magnetic field is generated between the stator 14 and the rotor 13, whereby the rotary shaft 16 rotates together with the compressor 11 (see Fig. 2). As a result, the intake air in the intake passage 3, which has passed through the compressor portion 41 of the exhaust gas turbocharger 40 without being sufficiently compressed, passes through the first intercooler 70 and the first bifurcation point 3a so as to be compressed by the compressor 11 of the electric turbocharger 10. Note that at this time, the check valve 50 provided in the bypass passage 5 is in a closed condition, and therefore the intake air does not flow into the bypass passage 5. The intake air compressed by the electric turbocharger 10 passes through the second bifurcation point 3b so as to be cooled by the second intercooler 80, and then flows into the engine 30.

Hence, in the electric motor 12 according to the first embodiment, as described above, the inner diameter expansion region 37b provided on the inner peripheral surface of the housing 17 in a position opposing the end part 14c of the stator core 14a has a larger diameter than the stator attachment surface 37a, and therefore does not contact the stator core 14a. Accordingly, even when a fastening force F generated upon contraction of the housing 17 following the shrink fitting is received by the stator core 14a, the fastening force F does not act directly on the steel plates St forming the end part 14c of the stator core 14a. There is therefore no need to modify the shape of the stator core 14a, and as a result, deformation of the steel plates St forming the end part 14c of the stator core 14a can be prevented by means of a simple structure.

Further, since shrink fitting is used as the method for fixing the stator core 14a to the inner peripheral surface of the housing 17, components such as fixing bolts are not required, and therefore a corresponding reduction in manufacturing cost can be achieved.

Moreover, holes and the like for passing bolts need not be provided in the housing 17, and therefore the electric turbocharger 10 itself can be reduced in size.

Furthermore, the inner diameter expansion region 37b includes the inclined surface 37c that inclines relative to the axial direction of the rotary shaft 16. When the stator 14 is fitted into the accommodation space 15 of the housing 17 from the X direction side during assembly of the electric motor 12, the inclined surface 37c contacts the end portion of the stator core 14a, and as a result, the stator core 14a is guided into the stator attachment surface 37a more smoothly.

Moreover, the length L3 the inner diameter expansion region equals or exceeds the length 10t of ten of the laminated steel plates St, and therefore deformation of the steel plate St on the end portion of the stator core 14a can be prevented more reliably.

### Second Embodiment

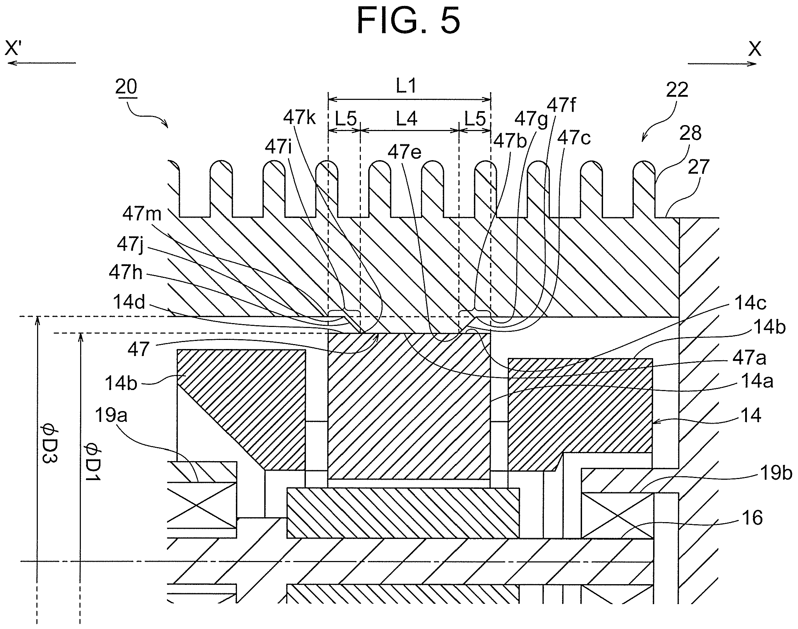

Fig. 5 shows a configuration of an electric turbocharger 20 having a rotating electric machine, or in other words an electric motor 22, according to this embodiment of the invention. In the electric turbocharger 20 according to this embodiment, the housing 17 of the electric turbocharger 10 according to the first embodiment is replaced with a housing 27 that includes a stator bearing portion 47 formed with two inclined surfaces 47c, 47h.

Note that identical reference numerals to the reference numerals of Figs. 1 to 4 denote identical or similar constituent elements, and therefore detailed description of these constituent elements has been omitted.

As shown in Fig. 5, the electric motor 22 of the electric turbocharger 20 includes the aluminum housing 27. A plurality of heat dissipating fins 28 are formed on an outer peripheral surface of the housing 27. Further, the substantially columnar accommodation space 15 is formed in the interior of the housing 27 in a similar manner to the interior of the housing 17 of the electric turbocharger 10 according to the first embodiment. The stator bearing portion 47 is formed as a strip-form projecting part on an inner peripheral surface of the housing 27 facing the accommodation space 15. Here, the stator bearing portion 47 includes a stator attachment surface 47a formed as a cylindrical curved surface. The inclined surface 47c is formed adjacent to the stator attachment surface 47a on an X direction end portion of the stator bearing portion 47 so as to widen outwardly in the radial direction toward the X direction side. A boundary between the stator attachment surface 47a and the inclined surface 47c constitutes an X' direction end portion 47e of the inclined surface 47c. Furthermore, 47f denotes an X direction end portion of the inclined surface 47c. Meanwhile, the inclined surface 47h is formed adjacent to the stator attachment surface 47a on an X' direction end portion of the stator bearing portion 47 so as to widen outwardly in the radial direction toward the X' direction side. A boundary between the stator attachment surface 47a and the inclined surface 47h constitutes an X direction end portion 47k of the inclined surface 47h. Furthermore, 47j denotes an X' direction end portion of the inclined surface 47c. Further, the stator core 14a is fixed by shrink fitting to the stator attachment surface 47a of the stator bearing portion 47.

On the inner peripheral surface of the housing 27, which faces the accommodation space 15, a line corresponding to the position in which the X direction end surface of the stator core 14a extends outwardly in the radial direction is set as a first expansion portion boundary line 47g. A region on the inner peripheral surface of the housing 27 between the end portion 47e of the inclined surface 47c and the first expansion portion boundary line 47g constitutes a first inner diameter expansion region 47b. Meanwhile, a line corresponding to a position in which an X' direction end surface of the stator core 14a extends outwardly in the radial direction is set as a second expansion portion boundary line 47m. A region on the inner peripheral surface of the housing 27 between the end portion 47k of the inclined surface 47h and the second expansion portion boundary line 47m constitutes a second inner diameter expansion region 47i.

The length of the stator attachment surface 47a in the axial direction of the rotary shaft 16 is set at L4. Further, the lengths of the first inner diameter expansion region 47b and the second inner diameter expansion region 47i in the axial direction of the rotary shaft 16 are set respectively at L5. The length L5 of the first inner diameter expansion region 47b and the second inner diameter expansion region 47i is greater than the length 10t of ten of the laminated steel plates St. Furthermore, here, similarly to the end part 14c of the stator core 14a, a part of the stator core 14a constituted by the ten steel plates laminated from the X' direction end portion of the stator core 14a is set as an end part 14d. In other words, the first inner diameter expansion region 47b and second inner diameter expansion region 47i on the inner peripheral surface of the housing 17 are formed in positions opposing the end parts 14c, 14d formed at the respective ends of the stator core 14a.

Note that the length L4 of the stator attachment surface 47a is set so that the stator 14 can remain fixed to the housing 27 over the entire operating temperature range of the electric turbocharger 20.

The diameter of the stator attachment surface 47a is set at ΦD1, i.e. a diameter identical to the diameter of the stator attachment surface 37a according to the first embodiment. Further, parts of an inner wall of the housing 27 other than the stator bearing portion 37, or in other words a part that extends in the X direction from the end portion 47f of the inclined surface 47c and a part that extends in the X' direction from the end portion 47j of the inclined surface 47h, are formed as cylindrical curved surfaces having an inner diameter of ΦD3. The diameter ΦD3 is larger than the diameter ΦD1. In other words, the inner diameter of the housing 27 expands in the X direction in the first inner diameter expansion region 47b and expands in the X' direction in the second inner diameter expansion region 47i. Hence, the diameters of the first inner diameter expansion region 47b and the second inner diameter expansion region 47i are respectively larger than the diameter of the stator attachment surface 47a. Moreover, the respective diameters of the first inner diameter expansion region 47b and the second inner diameter expansion region 47i are simultaneously larger than the diameter of the stator core 14a, and therefore the first inner diameter expansion region 47b and the second inner diameter expansion region 47i are formed so as not to contact the stator core 14a.

Hence, with the electric turbocharger 20 according to the second embodiment, as described above, the first inner diameter expansion region 47b and the second inner diameter expansion region 47i are provided respectively in positions opposing the end parts 14c, 14d forming the respective ends of the stator core 14a. Therefore, deformation of the steel plates St on the end parts 14c, 14d forming the respective ends of the stator core 14a can be prevented.

Note that in the first embodiment, the length L3 of the inner diameter expansion region 37b in the axial direction of the rotary shaft 16 may be varied in accordance with the outer diameter ΦD1 of the stator core 14a. In other words, the length L3 of the inner diameter expansion region 37b may be increased as the outer diameter of the stator core 14a increases, and reduced as the outer diameter of the stator core 14a decreases. More specifically, when the outer diameter ΦD1 of the stator core 14a is approximately 60 mm, the length L3 of the inner diameter expansion region 37b is set to be approximately equal to the length 10t of ten of the laminated steel plates St, but when ΦD1 is increased, the length L3 of the inner diameter expansion region 37b is increased in accordance with ΦD1. In so doing, the steel plates St can be prevented from deforming so as to curl over while securing the fastening force F from the housing 17. This applies likewise to the length L5 of the first inner diameter expansion regions 47b and 47i according to the second embodiment.

### REFERENCE SIGNS

- 12, 22: electric motor (rotating electric machine)
- 13: rotor
- 14: stator
- 14a: stator core
- 14c, 14d: end part
- 16: rotary shaft
- 17, 27: housing (casing)
- 37a, 47a: stator attachment surface
- 37b, 47b, 47i: inner diameter expansion region
- 37c, 47c, 47h: inclined surface
- St: steel plate

## Claims

1. A rotating electric machine comprising:
a casing;
a rotary shaft supported rotatably by the casing;
a rotor attached fixedly to the rotary shaft and housed in the interior of the casing; and
a stator fixed to the casing and provided opposite the rotor on a radial direction outer side of the rotor,
wherein the stator includes a stator core formed from a plurality of steel plates laminated in an axial direction of the rotary shaft, the stator core is attached fixedly to a stator attachment surface provided on an inner peripheral surface of the casing,
an inner diameter expansion region formed so as not to contact the stator core is provided adjacent to the stator attachment surface on the inner peripheral surface of the casing in a position opposing an end part of the stator core, and
a diameter of the inner diameter expansion region is larger than a diameter of the stator attachment surface.

2. The rotating electric machine according to claim 1, wherein the inner diameter expansion region includes an inclined surface that inclines relative to the axial direction of the rotary shaft.

3. The rotating electric machine according to claim 1 or 2, wherein a length of the inner diameter expansion region in the axial direction of the rotary shaft equals or exceeds a length of ten of the laminated steel plates.

4. The rotating electric machine according to any one of claims 1 to 3, wherein the inner diameter expansion region is provided respectively in positions opposing end parts forming respective ends of the stator core.

5. The rotating electric machine according to any one of claims 1 to 4, wherein the length of the inner diameter expansion region in the axial direction of the rotary shaft is increased as the outer diameter of the stator core increases.
